# EUROPÄISCHE PATENTSCHRIFT

(11) **EP 0 558 540 B1**
(45) Veröffentlichungstag und Bekanntmachung des Hinweises auf die Patenterteilung: **14.06.1995**
(21) Anmeldenummer: 91919926.5
(22) Anmeldetag: 18.11.1991
(51) Int. Cl.: F23M 5/04, F23R 3/00, F27D 1/14, E04F 13/08

(54) **KERAMISCHER HITZESCHILD AN EINER TRAGSTRUKTUR**
CERAMIC HEAT SHIELD ON A BEARING STRUCTURE
ECRAN THERMIQUE EN CERAMIQUE MONTE SUR UNE STRUCTURE PORTANTE

(30) Priorität: 29.11.1990 WO PCT/DE90/00919
(43) Veröffentlichungstag der Anmeldung: 08.09.1993
(73) Patentinhaber: SIEMENS AKTIENGESELLSCHAFT, 80333 München (DE)
(72) Erfinder: MAGHON, Helmut, D-4330 Mülheim/Ruhr (DE)
(86) Internationale Anmeldenummer: DE9100905
(87) Internationale Veröffentlichungsnummer: WO9209850

(56) Entgegenhaltungen:
- DE-B- 1 173 734
- GB-A- 2 075 659

## Beschreibung

Die Erfindung betrifft einen keramischen Hitzeschild an einer Tragstruktur, welcher Hitzeschild eine Vielzahl von Steinen aufweist, die im wesentlichen flächendeckend nebeneinander angeordnet und mit metallischen Haltern an der Tragstruktur befestigt sind, wobei jeder Stein eine auf der Tragstruktur aufliegende Kaltseite, eine der Tragstruktur abgewandte Heißseite und zumindest zwei Flanken aufweist, deren jede die Kaltseite mit der Heißseite verbindet und deren jeder zumindest ein Halter zugeordnet ist, der die Flanke mit einer Greiflasche zumindest teilweise übergreift.

Ein solcher Hitzeschild geht aus der DE-A 36 25 056 hervor.

Derartige hitzeschildbewehrte Tragstrukturen finden vielfältige Verwendung, beispielsweise als Flammrohre oder Heißgaskanäle in Verbrennungsanlagen wie z. B. Gasturbinenanlagen Entsprechende hitzeschildbewehrte Tragstrukturen gehen hervor aus der DE-B 11 73 734, der DE 25 23 449 C3 und der DE 36 25 056 A1. Gemäß der DE-6 11 73 734 besteht der Hitzeschild aus profilierten Steinen, die mit Nuten versehene Flanken aufweisen und wobei jeder Stein zwischen mindestens zwei Haltern, die in die Nuten eingreifen, festgeklemmt ist. Die Halter weisen Laschen auf, die unter dem befestigten Stein auf der Tragstruktur aufliegen und mit dieser fest verbunden sind, Gemäß der DE 36 25 056 A1 sind die Steine mit abgeschrägten Flanken versehen und liegen unmittelbar auf der vor thermischer Belastung zu schützenden Tragstruktur auf. Sie sind befestigt mit metallischen Klammern von jeweils trapezförmigem Querschnitt, die in V-förmige Spalte zwischen jeweils zwei Steinen eingelegt und mittels Schrauben o. dgl. gegen die Tragstruktur verspannt werden.

Als unter Umständen nachteilig an dem Hitzeschild gemäß der DE-B 11 73 734 ist hervorzuheben, daß ein von der Tragstruktur fernzuhaltendes heißes Fluid den Hitzeschild unterströmen kann, weil die Steine notwendigerweise beabstandet von der Tragstruktur angeordnet werden müssen, und daß außerdem den durch thermische Belastung hervorgerufenen Änderungen der Federkraft der Halter nicht in ausreichendem Maße Rechnung getragen werden kann. Eine Unterströmung des Hitzeschildes mit heißem Fluid kann möglicherweise zu Beschädigungen der Tragstruktur führen. Eine unvollständige Berücksichtigung der Veränderungen der Federkraft der Halter unter thermischer Beanspruchung kann zum Lösen der Steine bei hoher thermischer Belastung oder zu übermäßiger mechanischer Beanspruchung der Steine bei niedriger thermischer Belastung führen. Der Hitzeschild gemäß der DE 36 25 056 A1 beinhaltet zwar keine Gefahr durch Unterströmung, da die den Hitzeschild bildenden Steine unmittelbar auf der Tragstruktur aufliegen; die metallischen Befestigungselemente des Hitzeschildes sind allerdings unmittelbar dem heißen Fluid ausgesetzt und begrenzen die thermische Belastbarkeit des Hitzeschildes, bzw. sie erfordern besondere Kühlmaßnahmen.

Entsprechend soll mit der vorliegenden Erfindung ein keramischer Hitzeschild an einer Tragstruktur geschaffen werden, bei dem eine Beeinträchtigung der Tragstruktur durch heißes Fluid weitestgehend vermieden wird und bei dem die Halter der Steine so ausgebildet und angeordnet sind, daß sie ohne aufwendige Kühlung oder dergleichen über einen möglichst großen Temperaturbereich die Steine sicher und ohne übermäßige Beanspruchungen fixieren.

Zur Lösung dieser Aufgabe wird erfindungsgemäß ein Hitzeschild an einer Tragstruktur angegeben, welcher Hitzeschild eine Vielzahl von Steinen aufweist, die im wesentlichen flächendeckend nebeneinander angeordnet und mit metallischen Haltern an der Tragstruktur befestigt sind, wobei jeder Stein eine auf der Tragstruktur aufliegende Kaltseite, eine der Tragstruktur abgewandte Heißseite und zumindest zwei Flanken aufweist, deren jede die Kaltseite mit der Heißseite verbindet und deren jeder zumindest ein Halter zugeordnet ist, der die Flanke mit einer Greiflasche zumindest teilweise übergreift, dadurch gekennzeichnet, daß die Tragstruktur mit Nuten versehen ist, deren jede zwei einander gegenüberliegende Nutwände, einen Nutboden und eine Nutöffnung hat, und daß jeder Halter an einer Befestigungslasche, die etwa rechtwinklig zu der Greiflasche ausgerichtet ist, in einer Nut befestigt ist.

Erfindungsgemäß sind in der Tragstruktur Nuten vorgesehen, in denen die zur Befestigung der Steine dienenden Halter fixiert sind. Damit können die Steine direkt auf die Tragstruktur aufgelegt werden, und die Gefahr der Unterströmung wird vermieden. Zwar verbleiben Kanäle zwischen Steinen und Tragstruktur in Form der mit den Steinen bedeckten Nuten, jedoch kann durch geeignete Dimensionierung und räumliche Ausrichtung der Nuten sowie ggf. weitere Maßnahmen verhindert werden, daß ein die Heißseiten der Steine überströmendes heißes Fluid in die Nuten eindringt. Auch gestattet die Erfindung einen vollständigen Verzicht auf metallische Befestigungselemente, die auf den Heißseiten der Steine angeordnet sind. Schließlich sind die von den Haltern auf die Steine ausgeübten Belastungen im wesentlichen Druckbeanspruchungen, die im Hinblick auf die Sprödigkeit von Keramik unkritisch sind. Gefahrenträchtige Scher- und Zugbelastungen werden nahezu vollständig vermieden.

Die Erfindung gestattet auch eine beträchtliche Vereinfachung der Befestigung der Halter in der Tragstruktur; so kann in günstiger Weiterbildung der Erfindung jede Nutwand jeder Nut im Bereich des Nutbodens mit einer etwa parallel zum Nutboden verlaufenden Haltenut versehen werden, in die ein Halter mit einer an der Befestigungslasche beabstandet von der Greiflasche befindlichen Haltefeder eingreift. Es ist nicht mehr erforderlich, die Halter mit Schrauben o. dgl. zu befestigen. Das Anbringen eines Halters beschränkt sich auf das Einschieben der Haltefedern in die Haltenuten der Nutwände. Die Lagefixierung des Halters in der Nut wird bewirkt durch die Haftreibung der Kaltseite des umklammerten Steins auf der Tragstruktur; diese Haftreibung ist in der Regel aufgrund der Oberflächenrauhigkeit der üblicherweise unglasierten Keramikmasse der Steine mehr als ausreichend hoch.

Im Rahmen der Erfindung kann außerdem die Federwirkung der metallischen Halter geschützt und der Gefahr der plastischen Verformung beim Einbau und beim Betrieb begegnet werden, so daß ein gewisser Schutz gegen das Lösen von Steinen erzielt wird. Im Sinne einer Weiterbildung der Erfindung wird hierzu jede Nut im Bereich der Nutöffnung an jeder Nutwand mit einer Anschlagleiste versehen, wodurch die Breite der Nut im Bereich der Nutöffnung etwas verringert wird. Jeder Halter erhält zudem an der Befestigungslasche zwei Anschlagkanten, deren jede einer Anschlagleiste zugeordnet ist, und wobei die Anschlagkanten die zugeordneten Anschlagleisten überkragen. Damit stößt jede Anschlagkante an die zugehörige Anschlagleiste, wenn die Greiflasche des Halters entsprechend weit aus der Nut herausgebogen wird. Derart wird die Deformation des Halters begrenzt, und zu plastischen Verformungen führende Verbiegungen können ausgeschlossen werden.

Günstig ist es weiterhin, im Falle strukturierter Nutwände jede Nut mit einer Einführöffnung zu versehen, in die die Halter einlegbar und aus der sie in die Nut einführbar sind. Dies ist gleichermaßen wichtig und vorteilhaft für Nuten, deren Nutwände Haltenuten und/oder Anschlagleisten aufweisen.

Die Positionierung der Halter in den Nuten kann gesichert und verbessert werden, indem zwischen jeweils zwei Haltern ein Distanzstück in Form einer Platte o. dgl. in der Nut angeordnet wird. Ein solches Distanzstück kann beispielsweise auf dem Nutboden befestigt, insbesondere angeschraubt oder mittels Haltefedern in Haltenuten eingeführt, werden. Die Einfügung eines Distanzstückes ist besonders vorteilhaft zwischen zwei benachbarten Haltern, die verschiedenen Steinen zugeordnet sind, da die Distanzierung zweier demselben Stein zugeordneter Halter bereits durch den Stein gegeben ist.

In besonders vorteilhafter Weiterbildung der Erfindung im Rahmen jedweder Ausgestaltung ist jeder Stein an jeder Flanke mit einer Greifnut versehen, und jeder dem Stein zugeordnete Halter übergreift die Flanke lediglich zwischen Greifnut und Kaltseite. Auf diese Weise liegen metallische Halteelemente vollständig hinter den Heißseiten der Steine, und die thermische Beeinträchtigung dieser Halteelemente wird auf ein Minimum reduziert.

Besondere Bedeutung hat die Erfindung für Hitzeschilde an Tragstrukturen, die bezüglich einer Achse axialsymmetrisch, beispielsweise zylindrisch oder kegelig, sind. In solchen Fällen wird günstigerweise jede Nut kreisförmig um die Achse angeordnet. So verlaufen die Nuten senkrecht zu der Richtung, entlang derer ein heißes Fluid an dem Hitzeschild vorbeiströmen kann. Damit kann eine Unterströmung des Hitzeschildes mit heißem Fluid, das in die Nuten eindringt, im wesentlichen ausgeschlossen werden. Um die thermische Belastung der metallischen Halter weiter zu reduzieren, was im Rahmen ausgesprochener Hochtemperaturanwendungen wie z. B. in Brennkammern von Gasturbinenanlagen erforderlich sein kann, kann die Tragstruktur mit Kanälen zur Zustellung eines Fluids durch die Tragstruktur in die Nuten versehen werden. Vorteilhaft ist es dabei, jedem Halter mindestens einen Kanal zuzuordnen, so daß der Halter durch das durch den Kanal zugestellte Fluid gekühlt werden kann. Da das Fluid zwischen den Steinen herauströmt, sperrt es auch die Spalte zwischen den Steinen sowie die Nuten der Tragstruktur gegen das heiße Fluid ab; neben der Kühlung bewirkt es auch eine vorteilhafte "Sperrung".

In weiterer günstiger Ausbildung der Erfindung im Rahmen jedweder Gestaltung sind die Nuten an die Tragstruktur angeformt, beispielsweise eingedreht oder eingefräst. Derart kann, im Gegensatz zum gleichfalls möglichen Aufbau der Nuten durch 5 das Aufbringen zusätzlicher Bauteile auf die Tragstruktur, der Fertigungsaufwand signifikant reduziert werden.

Die weitere Erläuterung der Erfindung erfolgt anhand der in der Zeichnung dargestellten bevorzugten Ausführungsbeispiele. Wo zur Herausstellung der spezifischen Vorteile der Erfindung dienlich, ist die Zeichnung schematisiert und/oder leicht verzerrt gehalten.
Im einzelnen zeigen:
Fig. 1 ein Beispiel mit mehreren Ausführungsmöglichkeiten für einen keramischen Hitzeschild an einer Tragstruktur gemäß der Erfindung;
Fig. 2 ein Beispiel zur Verklammerung eines Steines nach der Erfindung;
Fig. 3, 4, und 5 verschiedene Ansichten eines metallischen Halters für einen erfindungsgemäßen keramischen Hitzeschild an einer Tragstruktur;
Fig. 6 eine Darstellung von metallischen Haltern für einen kegeligen Hitzeschild an einer Tragstruktur nach der Erfindung.

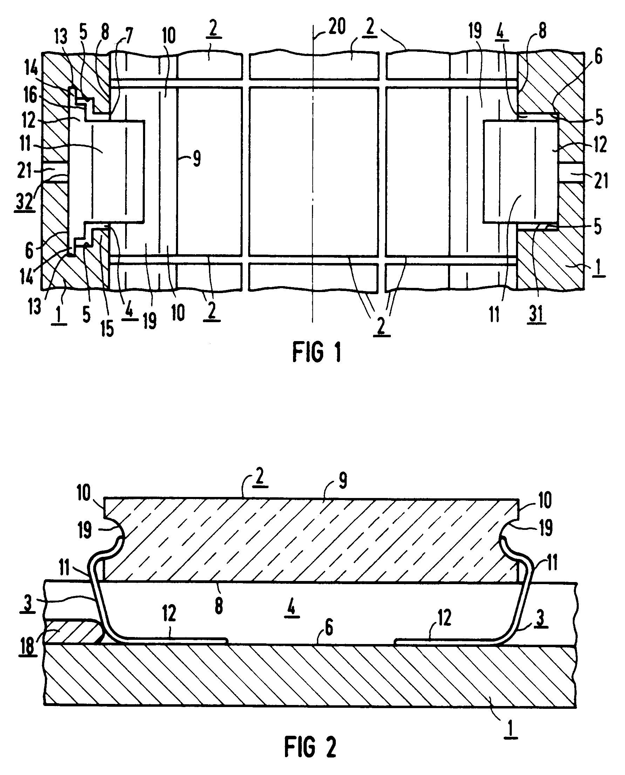

Fig. 1 zeigt eine Tragstruktur 1, die bezüglich einer Achse 20 axialsymmetrisch ist, an der im Sinne der Erfindung Steine 2 zur Bildung eines keramischen Hitzeschildes mittels Haltern 31, 32 befestigt sind. Jeder Halter 31, 32 befindet sich in einer Nut 4, die in die Tragstruktur 1 eingearbeitet ist und zwei Nutwände 5, einen Nutboden 6 und eine Nutöffnung 7 besitzt. Ein Stein 2 weist eine auf der Tragstruktur 1 aufliegende Kaltseite 8 und eine der Tragstruktur 1 abgewandte Heißseite 9 auf. Darüber hinaus verfügt jeder Stein 2 über zwei Flanken 10, die Kaltseite 8 und Heißseite 9 miteinander verbinden und jeweils teilweise von der Greiflasche 11 eines zugeordneten Halters 31, 32 übergriffen werden. Selbstverständlich ist es auch möglich, eine Flanke 10 mit einer Greiflasche 11 vollständig, also bis zur Heißseite 9, zu übergreifen. Auf diese Weise aber wird der Halter 31, 32 teilweise ungeschützt dem heißen Fluid, das entlang einer zur Achse 20 im wesentlichen parallelen Strömungsrichtung durch die Tragstruktur 1 geführt wird, ausgesetzt, wodurch die Belastbarkeit des Hitzeschildes u. U. beschränkt wird. Besonders günstig ist es daher, in jede Flanke 10 eine Greifnut 19 einzubringen, in die die Greiflasche 11 des zugeordneten Halters 31, 32 unter Wahrung eines gewissen Abstandes von der Heißseite 9 eingreifen kann. Die Kaltseite 8 jedes Steines 2 liegt im wesentlichen flach auf der Tragstruktur 1 auf und wird durch die Halter 31, 32 auf diese aufgepreßt, so daß der Stein 2 aufgrund der Haftreibung der keramischen Kaltseite 8 auf der metallischen Tragstruktur 1 hinreichend in seiner Lage fixiert ist. In Fig. 1 sind zwei Ausführungsmöglichkeiten für Halter 31, 32 und Nut 4 dargestellt. Im einfachsten Fall, wie dargestellt auf der rechten Seite von Fig. 1, hat die Nut 4 ungefähr rechteckigen Querschnitt, und die Befestigungslasche 12 jedes Halters 31 liegt auf dem Nutboden 6 auf und ist dort, z. B. mittels Schrauben o. dgl., befestigt. Eine Weiterbildung von Halter 32 und Nut 4 ist auf der linken Seite von Fig. 1 dargestellt. Der Halter 32 weist an seiner Befestigungslasche 12 Haltefedern 14, die in Haltenuten 13 eingreifen, die in die Nutwände 5 eingearbeitet sind. Auf diese Weise kann der Halter 32 hinreichend in der Nut 4 verankert werden. Weiterhin ist die Nutöffnung 7 auf der linken Seite von Fig. 1 durch Anschlagleisten 15 auf beiden Nutwänden 5 verengt, so daß jede Nutwand 5 eine etwa treppenförmige Gestalt erhält. Zu den Anschlagleisten 15 korrespondieren Anschlagkanten 16 an dem Halter 32. Wird der Halter 32 an der Greiflasche 11 ausreichend weit aus der Nut 4 herausgebogen, was beim Einbau wie auch beim Betrieb geschehen kann, so stoßen die Anschlagkanten 16 an die Anschlagleisten 15 und verhindern eine weitere Bewegung der Greiflasche 11 aus der Nut heraus. Plastischen Verformungen des Halters 32 wird somit wirksam begegnet. Gemäß einer speziellen Ausführungsform der Erfindung ist die in Fig. 1 dargestellte Tragstruktur 1 versehen mit Kanälen 21 zur Zustellung eines Fluides auf die Halter 31, 32. Mit dieser Maßnahme kann, insbesondere bei ausgesprochenen Hochtemperaturanwendungen, wie sie in Brennkammern von Gasturbinenanlagen vorkommen, die Belastung des Hitzeschildes weiter gesteigert werden.

Fig. 2 zeigt Einzelheiten der Verklammerung eines Steines 2 auf einer Tragstruktur 1. Der Stein 2 weist zwei einander gegenüberliegende Flanken 10 zwischen Heißseite 9 und Kaltseite 8 auf, die mit Greifnuten 19 versehen sind, in die jeweils eine Greiflasche 11 eines im wesentlichen L-förmigen Halters 3 eingreift. Erfindungsgemäß sind die Halter 3 in einer Nut 4 der Tragstruktur 1 an Befestigungslaschen 12, die auf dem Nutboden 6 aufliegen, verankert - Befestigungsmittel, deren Auswahl und Anwendung im Ermessen des einschlägig tätigen Fachmanns liegt, sind nicht dargestellt. Beide Befestigungslaschen 12 sind so angeordnet, daß sie unter den Stein 2 ragen und dementsprechend von diesem gegen übermäßige thermische Beanspruchung geschützt werden. In Fig. 2 ist weiterhin ein Distanzstück 18 auf dem Nutboden 6 schematisch angedeutet, welches zur Distanzierung von Haltern 3, die verschiedenen Steinen 2 zugeordnet sind, dienen kann.

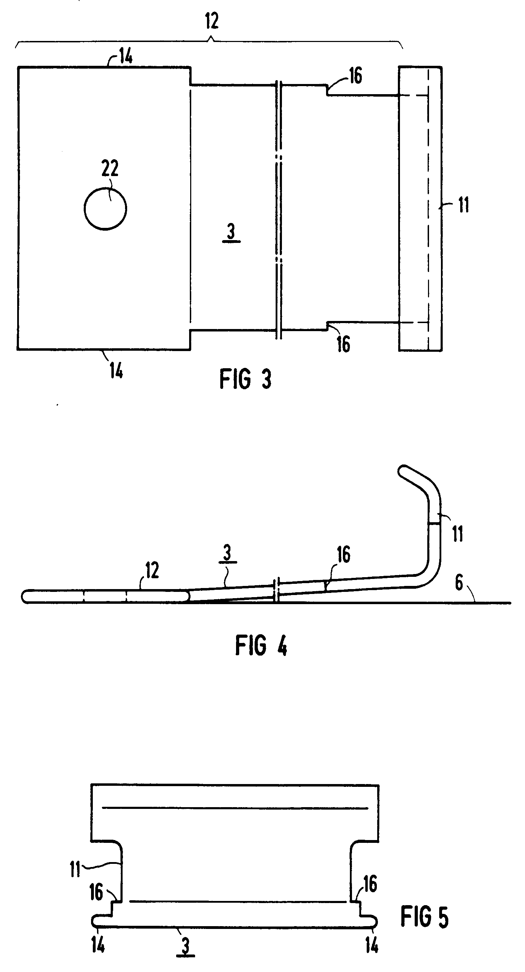

Die Fig. 3, 4 und 5 zeigen verschiedene Ansichten eines Halters 3. Zur Erläuterung wird nunmehr auf diese drei Fig. gemeinsam Bezug genommen. Jeder Halter 3 weist eine Befestigungslasche 12 auf, an der er auf dem Nutboden 6 befestigt wird. Diese Befestigung kann mittels einer Schraube erfolgen, die durch eine Bohrung 22 gesteckt wird. Günstigerweise erfolgt jedoch die Befestigung des Halters mittels Haltefedern 14, die in Haltenuten 13 (siehe Fig. 1) einzuschieben sind. In jedem Falle erfolgt die Befestigung des Halters 3 beabstandet von der Greiflasche 11, die etwa rechtwinklig von der Befestigungslasche 12 absteht, um zur Befestigung des Steines 2 (vgl. Fig. 1) eine ausreichende Elastizität zu wahren. Um den Halter 3 beim Einbau und/oder beim Betrieb nicht übermäßigen Verbiegungen zu unterwerfen, ist die Befestigungslasche 12 ausgestattet mit Anschlagkanten 16, die - vgl. Fig. 1 - in der entsprechend ausgebildeten Nut 4 bei übermäßigen Verbiegungen an zugehörige Anschlagleisten 15 stoßen.

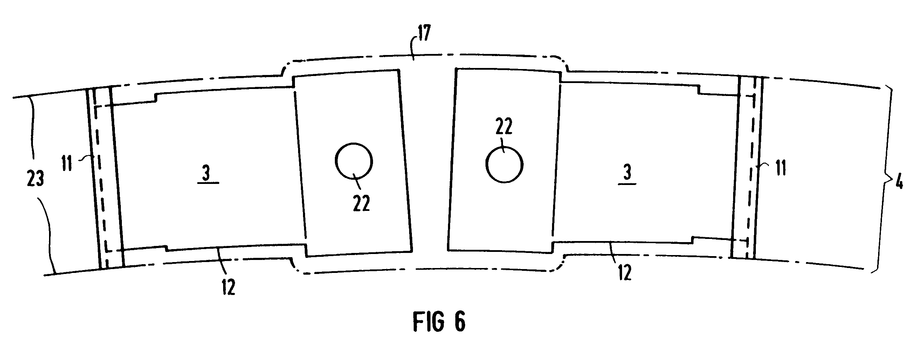

Fig. 6 zeigt ein weiteres Ausführungsbeispiel für Halter 3 im Zusammenhang mit erfindungsgemäßen keramischen Hitzeschilden an Tragstrukturen. Wie bereits ausgeführt, gestattet die Erfindung nicht nur die Auskleidung ebener oder zylindrischer Strukturen, sondern sie ermöglicht auch die Bewehrung komplizierter, beispielsweise kegelig geformter, Tragstrukturen.

Soweit eine Tragstruktur eine Axialsymmetrie aufweist, können die Nuten aus der um die durch die Axialsymmetrie bestimmte Achse gedrehten Tragstruktur herausgestochen werden. In derartigen Nuten können u. U. allerdings die in den Figuren 3, 4 und 5 dargestellten Halter 3 mit im wesentlichen geraden Befestigungslaschen 12 nicht mehr eingesetzt werden. Die Befestigungslaschen 12 müssen, wie dargestellt in Fig. 6, durch bogen- oder parallelogrammartige Ausformung der Form der Nut angepaßt werden. Für Nuten in kegeligen Tragstrukturen können dazu die Befestigungslaschen 12 entlang zweier Leitlinien 23, die im konkreten Fall konzentrische Kreise sind, gebogen sein. Für Befestigungslaschen 12, die jeweils unter dem zu befestigenden Stein zu liegen kommen, ist für jede Flanke des Steins ein anders gestalteter Halter 3 erforderlich. In Fig. 6 ist dies angedeutet. Die Leitlinien 23 sind im wesentlichen Abwicklungen der die Nut 4 beschreibenden Kurven in die Ebene. In gewissem Sinne deuten sie also den Verlauf der Nut 4 an. Der Vollständigkeit halber ist eine Erweiterung der Nut 4, eine Einführöffnung 17 zum Einführen der Halter 3, angedeutet. Halter 3, die in der Einführöffnung 17 zu liegen kommen, müssen unabhängig von der Art der Befestigung der übrigen Halter 3 mittels Schrauben o. dgl., die z. B. durch entsprechende Bohrungen 22 geführt werden, befestigt werden.

Mit der vorliegenden Erfindung wird ein keramischer Hitzeschild an einer Tragstruktur geschaffen, der eine Vielzahl von Steinen aufweist, die mit metallischen Haltern an der Tragstruktur befestigt sind, wobei die mechanische und thermische Belastbarkeit des Hitzeschildes außerordentlich hoch ist. Die Erfindung ist besonders zugeschnitten auf ausgesprochene Hochtemperatur-Anwendungen, wie sie z. B. in modernen Gasturbinenanlagen vorliegen.

## Patentansprüche

1. Hitzeschild an einer Tragstruktur (1), welcher Hitzeschild eine Vielzahl von Steinen (2) aufweist, die im wesentlichen flächendeckend nebeneinander angeordnet und mit metallischen Haltern (3, 31, 32) an der Tragstruktur (1) befestigt sind, wobei jeder Stein (2) eine auf der Tragstruktur (1) aufliegende Kaltseite (8), eine der Tragstruktur (1) abgewandte Heißseite (9) und zumindest zwei Flanken (10) aufweist, deren jede die Kaltseite (8) mit der Heißseite (9) verbindet und deren jeder zumindest ein Halter (3, 31, 32) zugeordnet ist, der die Flanke (10) mit einer Greiflasche (11) zumindest teilweise übergreift, **dadurch gekennzeichnet,** daß die Tragstruktur (1) mit Nuten (4) versehen ist, deren jede zwei einander gegenüberliegende Nutwände (5), einen Nutboden (6) und eine Nutöffnung (7) hat, und daß jeder Halter (3, 31, 32) an einer Befestigungslasche (12), die etwa rechtwinklig zu der Greiflasche (11) ausgerichtet ist, in einer Nut (4) befestigt ist.

2. Hitzeschild an einer Tragstruktur (1) nach Anspruch 1, wobei
a) in jeder Nut (4) jede Nutwand (5) im Bereich des Nutbodens (6) eine etwa parallel zu diesem verlaufende Haltenut (13) aufweist;
b) jeder Halter (3, 31, 32) an der Befestigungslasche (12), beabstandet von der Greiflasche (11), zwei Haltefedern (14) aufweist;
c) in jeder Nut (4) jeder Halter (3, 31 32) mit jeweils einer Haltefeder (14) in jede Haltenut (13) eingreift.

3. Hitzeschild an einer Tragstruktur (1) nach Anspruch 1 oder 2, wobei
a) in jeder Nut (4) jede Nutwand (5) im Bereich der Nutöffnung (7) eine Anschlagleiste (15) aufweist;
b) jeder Halter (3, 31, 32) an der Befestigungslasche (12) zwei Anschlagkanten (16) aufweist, wobei jeder Anschlagleiste (15) eine Anschlagkante (16) zugeordnet ist;
c) die Anschlagkanten (16) die zugeordneten Anschlagleisten (15) überkragen.

4. Hitzeschild an einer Tragstruktur (1) nach Anspruch 2 oder 3, wobei jede Nut (4) eine Einführöffnung (17) aufweist, in die die Halter (3, 31,32) einlegbar und aus der sie in die Nut (4) einführbar sind.

5. Hitzeschild an einer Tragstruktur (1) nach einem der vorhergehenden Ansprüche, wobei in jeder Nut (4) zwischen jeweils zwei Haltern (3, 31, 32) ein Distanzstück (18) angeordnet ist.

6. Hitzeschild an einer Tragstruktur (1) nach einem der vorhergehenden Ansprüche, wobei
a) jeder Stein (2) in jeder Flanke (10) eine Greifnut (19) aufweist;
b) jeder Halter (3, 31,32) mit der Greiflasche (11) die Flanke (10) zwischen der Greifnut (19) und der Kaltseite (8) übergreift.

7. Hitzeschild an einer Tragstruktur (1) nach einem der vorhergehenden Ansprüche, wobei die Tragstruktur (1) bezüglich einer Achse (20) axialsymmetrisch ist.

8. Hitzeschild an einer Tragstruktur (1) nach Anspruch 7, wobei jede Nut (4) kreisförmig um die Achse (20) angeordnet ist.

9. Hitzeschild an einer Tragstruktur (1) nach einem der vorhergehenden Ansprüche, wobei
a) die Tragstruktur (1) Kanäle (21) zur Zustellung eines Kühlfluids aufweist, die in die Nutböden (6) münden;
b) jedem Halter (3, 31, 32) mindestens ein Kanal (21) zugeordnet ist und der Halter (3, 31, 32) durch das durch den Kanal (21) zugestellte Kühlfluid kühlbar ist.

10. Hitzeschild an einer Tragstruktur (1) nach einem der vorhergehenden Ansprüche, wobei die Nuten (4) an die Tragstruktur (1) angeformt sind.

11. Hitzeschild an einer Tragstruktur (1) nach einem der vorhergehenden Ansprüche, wobei für jeden Stein (2) die Befestigungslasche (12) jedes diesem zugeordneten Halters (3, 31, 32) unter dessen Kaltseite (8) liegt.

12. Hitzeschild an einer Tragstruktur (1) nach einem der vorhergehenden Ansprüche, wobei
a) die Tragstruktur (1) entlang einer Strömungsrichtung von einem heißen Fluid, insbesondere einem heißen Gas, durchströmbar ist;
b) jede Nut (4) etwa rechtwinklig zur Strömungsrichtung angeordnet ist.

13. Verwendung eines Hitzeschildes an einer Tragstruktur (1) nach einem der vorhergehenden Ansprüche zur Herstellung einer Verbrennungsanlage.

14. Verwendung eines Hitzeschildes an einer Tragstruktur (1) nach einem der Ansprüche 1 bis 12 zur Herstellung einer Gasturbinenanlage.

## Claims

1. Heat shield on a load-bearing structure (1), which heat shield has a multiplicity of tiles (2) which are located adjacent to one another to substantially cover an area and are fastened on the load-bearing structure (1) by means of metallic restraints (3, 31, 32), wherein each tile (2) has a cold side (8) in contact with the load-bearing structure (1), a hot side (9) facing away from the load-bearing structure (1) and at least two flanks (10), each of which connects the cold side (8) to the hot side (9) and with each of which is associated at least one restraint (3, 31, 32) which at least partially reaches over the flank (10) by means of an engagement strap (11), characterized in that the load-bearing structure (1) is provided with grooves (4), each of which has two opposite groove walls (5), a groove bottom (6) and a groove opening (7), and in that each restraint (3, 31, 32) is fastened in a groove (4) on a fastening strap (12) which is directed approximately at right angles to the engagement strap (11).

2. Heat shield on a load-bearing structure (1) according to Claim 1, wherein
a) in each groove (4), each groove wall (5) has a retention slot (13) in the region of the slot bottom (6) and extending approximately parallel to the latter;
b) each restraint (3, 31, 32) has two restraint keys (14) on the fastening strap (12), at a distance from the engagement strap (11);
c) in each slot (4), each restraint (3, 31, 32) engages with one restraint key (14) in each retention slot (13).

3. Heat shield on a load-bearing structure (1) according to Claim 1 or 2, wherein
a) in each slot (4), each slot wall (5) has a stop strip (15) in the region of the slot opening (7);
b) each restraint (3, 31, 32) has two stop edges (16) on the fastening strap (12), a stop edge (16) being associated with each stop strip (15);
c) the stop edges (16) project beyond the associated stop strips (15).

4. Heat shield on a load-bearing structure (1) according to Claim 2 or 3, wherein each groove (4) has an insertion opening (17) into which the restraints (3, 31, 32) can be laid and from which they can be introduced into the groove (4).

5. Heat shield on a load-bearing structure (1) according to one of the preceding claims, wherein a distance piece (18) is located in each groove (4) between each two restraints (3, 31, 32).

6. Heat shield on a load-bearing structure (1) according to one of the preceding claims, wherein
a) each tile (2) has an engagement groove (19) in each flank (10);
b) the engagement strap (11) of each restraint (3, 31, 32) reaches over the flank (10) between the engagement groove (19) and the cold side (8).

7. Heat shield on a load-bearing structure (1) according to one of the preceding claims, wherein the load-bearing structure (1) is axially symmetrical about an axis (20).

8. Heat shield on a load-bearing structure (1) according to Claim 7, wherein each groove (4) is arranged in a circular manner about the axis (20).

9. Heat shield on a load-bearing structure (1) according to one of the preceding claims, wherein
a) the load-bearing structure (1) has ducts (21) for supplying a cooling fluid, the ducts (21) emerging into the groove bottoms (6);
b) at least one duct (21) is associated with each restraint (3, 31, 32) and the restraint (3, 31, 32) can be cooled by the cooling fluid supplied through the duct (21).

10. Heat shield on a load-bearing structure (1) according to one of the preceding claims, wherein the grooves (4) are formed on the load-bearing structure (1).

11. Heat shield on a load-bearing structure (1) according to one of the preceding claims, wherein for each tile (2), the fastening strap (12) of each restraint (3, 31, 32) associated with the tile is located under the cold side (8) of the tile.

12. Heat shield on a load-bearing structure (1) according to one of the preceding claims, wherein
a) a hot fluid, in particular a hot gas, can flow through the load-bearing structure (1) along a flow direction;
b) each groove (4) is located approximately at right angles to the flow direction.

13. Use of a heat shield on a load-bearing structure (1) according to one of the preceding claims for the production of a combustion installation.

14. Use of a heat shield on a load-bearing structure (1) according to one of Claims 1 to 12 for the production of a gas turbine installation.

## Revendications

1. Ecran thermique monté sur une structure portante (1), ledit écran thermique présentant une multitude de pierres (2) qui sont disposées les unes à côté des autres en recouvrant essentiellement la surface et qui sont fixées à la structure portante (1) avec des dispositifs de fixation métalliques (3, 31, 32), chaque pierre (2) présentant un côté froid (8) qui vient s'appuyer contre la structure portante (1), un côté chaud (9) qui est détourné de la structure portante (1) et au moins deux flancs (10), chacun de ces derniers reliant le côté froid (8) au côté chaud (9) et au moins un dispositif de fixation (3, 31, 32) étant attribué à chacun d'eux, qui fait saillie avec une patte de préhension (11) au moins partiellement par rapport au flanc (10), caractérisé en ce que la structure portante (1) est munie de rainures (4), chacune de ces dernières possédant deux parois de rainures (5) opposées l'une à l'autre, un fond de rainure (6) et une ouverture de rainure (7), et en ce que chaque dispositif de fixation (3, 31, 32) est fixé dans une rainure (4) à une patte de fixation (12) qui est orientée de manière approximativement perpendiculaire à la patte de préhension (11).

2. Ecran thermique monté sur une structure portante (1) selon la revendication 1, dans lequel
a) dans chaque rainure (4), chaque paroi de rainure (5) présente, dans la zone du fond de rainure (6), une rainure d'arrêt (13) s'étendant à peu près parallèlement à ce dernier;
b) chaque dispositif de fixation (3, 31, 32) présente, contre la patte de fixation (12), à l'écart de la patte de préhension (11), deux ressorts d'arrêt (14);
c) dans chaque rainure (4), chaque dispositif de fixation (3, 31, 32) vient s'engrener dans chaque rainure d'arrêt (13) avec respectivement un ressort d'arrêt (14).

3. Ecran thermique monté sur une structure portante (1) selon la revendication 1 ou 2, dans lequel
a) dans chaque rainure (4), chaque paroi de rainure (5) présente une languette de butée (15) dans la zone de l'ouverture de rainure (7);
b) chaque dispositif de fixation (3, 31, 32) présente deux arêtes de butée (16) contre la patte de fixation (12), une rainure de butée (16) étant attribuée à chaque languette de butée (15);
c) les arêtes de butée (16) sont disposées en porte-à-faux par rapport aux languettes de butée (15) qui leur sont attribuées.

4. Ecran thermique monté sur une structure portante (1) selon la revendication 2 ou 3, dans lequel chaque rainure (4) présente une ouverture d'introduction (17) dans laquelle les dispositifs de fixation (3, 31, 32) peuvent s'insérer et hors de laquelle ils peuvent s'introduire dans la rainure (4).

5. Ecran thermique monté sur une structure portante (1) selon l'une quelconque des revendications précédentes, dans lequel, dans chaque rainure (4), est disposée une pièce d'écartement (18) entre respectivement deux dispositifs de fixation (3, 31, 32).

6. Ecran thermique monté sur une structure portante (1) selon l'une quelconque des revendications précédentes, dans lequel
a) chaque pierre (2), dans chaque flanc (10), présente une rainure de préhension (19) ;
b) chaque dispositif de fixation (3, 31, 32) fait saillie avec la patte de préhension (11) par rapport au flanc (10) entre la rainure de préhension (19) et le côté froid (8).

7. Ecran thermique monté sur une structure portante (1) selon l'une quelconque des revendications précédentes, dans lequel la structure portante (1) est disposée en symétrie axiale par rapport à un axe (20).

8. Ecran thermique monté sur une structure portante (1) selon la revendication 7, dans lequel chaque rainure (7) est disposée en forme de cercle autour de l'axe (20).

9. Ecran thermique monté sur une structure portante (1) selon l'une quelconque des revendications précédentes, dans lequel
a) la structure portante (1) présente des canaux (21) pour l'amenée d'un fluide de refroidissement, qui aboutissent dans les fonds de rainure (6);
b) à chaque dispositif de fixation (3, 31, 32), est attribué au moins un canal (21), et le dispositif de fixation (3, 31, 32) peut être refroidi à l'aide du fluide de refroidissement amené à travers le canal (21).

10. Ecran thermique monté sur une structure portante (1) selon l'une quelconque des revendications précédentes, dans lequel les rainures (4) sont façonnées contre la structure portante (1).

11. Ecran thermique monté sur une structure portante (1) selon l'une quelconque des revendications précédentes, dans lequel, pour chaque pierre (2), la patte de fixation (12) de chacun des dispositifs de fixation (3, 31, 32) qui lui est attribuée, est disposée en dessous de son côté froid (8).

12. Ecran thermique monté sur une structure portante (1) selon l'une quelconque des revendications précédentes, dans lequel
a) la structure portante (1) peut être traversée, dans le sens d'écoulement, par un fluide chaud, en particulier par un gaz chaud;
b) chaque rainure (4) est disposée de manière approximativement perpendiculaire au sens d'écoulement.

13. Utilisation d'un écran thermique monté sur une structure portante (1) selon l'une quelconque des revendications précédentes, pour la réalisation d'une installation d'incinération.

14. Utilisation d'un écran thermique monté sur une structure portante (1) selon l'une quelconque des revendications 1 à 12, pour la réalisation d'une installation à turbine à gaz.
